# EUROPÄISCHE PATENTSCHRIFT

(11) **EP 2 394 778 B1**
(45) Veröffentlichungstag und Bekanntmachung des Hinweises auf die Patenterteilung: **12.09.2012**
(21) Anmeldenummer: 11002602.8
(22) Anmeldetag: 29.03.2011
(51) Int. Cl.: B23Q 1/01, B23Q 11/00

(54) **Vertikales Bearbeitungszentrum mit einer Bodenöffnung für die Abfuhr der Bearbeitungsrückstände aus dem Arbeitsraum des Bearbeitungszentrums und mit einem mobilen Förderer**
Vertical processing centre with a floor opening for removing machining residues from the working area of the processing centre and a with a mobile conveyor
Centre de traitement vertical doté d'une ouverture au sol pour l'évacuation des résidus de traitement de l'espace de travail du centre de traitement et avec un convoyeur mobile

(30) Priorität: 10.06.2010 DE 102010023277
(43) Veröffentlichungstag der Anmeldung: 14.12.2011
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, 78598 Königsheim (DE)
(74) Vertreter: Hager, Thomas Johannes

(56) Entgegenhaltungen:
- EP-A1- 0 568 798
- DE-A1-102006 038 657
- US-A- 4 955 770
- US-A- 5 439 431

## Beschreibung

Die Erfindung betrifft ein vertikales Bearbeitungszentrum, insbes. zum Fräsen, Drehen und Bohren, in Gantry- oder Fahrständer-Bauform mit einem zwei Seitenwandungen aufweisenden U-förmigen Maschinengestell und mit einer auf den Seitenwandungen angeordneten werkzeugtragenden Baugruppe, die in den drei linearen Raumrichtungen (X-Y-Z) elektromotorisch gesteuert verstellbar ist, und mit einer zwischen den Seitenwandungen befindlichen werkstücktragenden Baugruppe, und mit einer Bodenöffnung im Maschinengestellboden für die Abfuhr von Bearbeitungsrückständen aus dem Arbeitsbereich der werkzeugtragenden und der werkstücktragenden Baugruppe und mit einem Förderer für die Aufnahme der Bearbeitungsrückstände aus dem Arbeitsbereich und die Abfuhr der Bearbeitungsrückstände. Ein solches Bearbeitungszentrum ist aus den Patentdokumenten US-A-5,439,431 und EP-A-0 568 798 bekannt.

Bei einem derartigen Bearbeitungszentrum wird der Arbeitsbereich der werkzeugtragenden und der werkstücktragenden Baugruppe seitlich und hinten durch das U-förmige Maschinengestell und eine Trennwand und vorne durch eine Arbeitsraumtür begrenzt. Der Arbeitsbereich der werkzeugtragenden und werkstücktragenden Baugruppe ist bei einem Bearbeitungszentrum zum Fräsen, Drehen und Bohren generell immer der Bereich, in dem das Werkstück durch ein abtragendes Werkzeug bearbeitet wird. Bei einem abtragenden Fertigungsverfahren fallen auch immer in einer entsprechend großen Menge Bearbeitungsrückstände an. Diese Bearbeitungsrückstände sind in der Regel Bearbeitungsspäne und/oder Bearbeitungsstäube. Bearbeitungsstäube können zum Beispiel bei einer Graphitbearbeitung anfallen. Bearbeitungsrückstände sind aber auch noch diverse Kühlmittelflüssigkeiten, die zum Kühlen und Schmieren bei der abtragenden Bearbeitung gegebenenfalls benötigt werden.

Der bisherige Stand der Technik bei einem vertikalen Bearbeitungszentrum in Gantry- oder Fahrständer-Bauform mit einem Förderer für die Aufnahme der Bearbeitungsrückstände aus dem Arbeitsbereich und die Abfuhr der Bearbeitungsrückstände zu einer Sammelstelle außerhalb des Bearbeitungszentrums besteht darin, dass im unteren Bereich des Maschinengestells am Maschinengestellumfang eine Aussparung für den Ein- und Ausschub eines Förderers angebracht ist. Durch diese Aussparung kann der Förderer mit seinem Aufgabenbereich unterhalb des Arbeitsbereiches des Bearbeitungszentrums gebracht werden. Infolge der Schwerkraft und/oder der Schwemmwirkung der Kühlmittelflüssigkeit fallen bzw. fließen die Bearbeitungsrückstände in den Aufgabenbereich des Förderers und werden dann von diesem an eine Sammelstelle außerhalb des Bearbeitungszentrums transportiert. So eine Ausgestaltung bei einem vertikalen Bearbeitungszentrum in Gantry- oder Fahrständer-Bauform ist in der DE 44 41 252 B4 offenbart. Da bei dieser Ausführung die Einbaulage des Förderers zum Bearbeitungszentrum immer konstruktiv fest vorgegeben ist, besteht keine Möglichkeit, diese Einbaulage vor Ort beim Betreiber ohne großen Aufwand zu verändern.

Ausgehend von diesem Stand der Technik liegt der vorliegenden Erfindung die Aufgabe zugrunde, die bekannte Lösung unter Beibehaltung ihrer Vorteile dahingehend weiter zu verbessern, dass die Einbaulage des Förderers in Bezug auf das vertikale Bearbeitungszentrum in Gantry- oder Fahrständer-Bauform ohne großen Aufwand veränderbar bzw. frei wählbar ist und dass somit die Lage des Förderers zum Bearbeitungszentrum sehr flexibel den Gegebenheiten am Aufstellort angepasst werden kann.

Die Lösung dieser Aufgabe erfolgt bei einem vertikalen Bearbeitungszentrum gemäß Anspruch 1.

Infolge dieser Ausgestaltung kann die Einbaulage des Förderers in Bezug auf das vertikale Bearbeitungszentrum in Gantry- oder Fahrständer-Bauform ohne großen Aufwand verändert und somit die Lage des Förderers zum Bearbeitungszentrum sehr flexibel den Gegebenheiten am Aufstellort angepasst werden, ohne dass es konstruktiver Änderung an dem Bearbeitungszentrum bedarf.

Vorteilhafte Weiterbildungen ergeben sich aus den Unteransprüchen.

Gemäß einer bevorzugten Ausgestaltung ist im Arbeitsbereich der werkzeugtragenden und der werkstücktragenden Baugruppe zwischen den Seitenwandungen und der Bodenöffnung im Maschinengestellboden eine allseitig ausgeformte trichterförmige Verjüngung angebracht. Dadurch können die Bearbeitungsrückstände besser in den Förderer abgeführt werden.

Gemäß einer bevorzugten Ausgestaltung ist der Förderer als Späneförderer mit einem endlos umlaufenden kraftbetriebenen Förderband ausgebildet.

Gemäß einer bevorzugten Ausgestaltung sind auf dem endlos umlaufenden Förderband des Späneförderers beabstandete Mitnahmeleisten für die Mitnahme der Bearbeitungsrückstände angebracht.

Gemäß einer bevorzugten Ausgestaltung ist als Sammelstelle für die Bearbeitungsrückstände ein verfahrbarer Auffangbehälter, insbes. ein Spänewagen vorgesehen.

Gemäß einer bevorzugten Ausgestaltung ist die Bodenöffnung im Maschinengestellboden so angeordnet, dass der von links oder von rechts einschiebbare Späneförderer die gleichen geometrischen Abmessungen besitzen kann. Dadurch kann ein und derselbe Späneförderer von der linken oder von der rechten Maschinenseite eingeschoben werden.

Gemäß einer bevorzugten Ausgestaltung ist die Bodenöffnung im Maschinengestellboden so angeordnet, dass der von links oder von rechts oder von hinten oder von vorne einschiebbare Späneförderer die gleichen geometrischen Abmessungen besitzen kann. Dadurch kann ein und derselbe Späneförderer von der linken oder von der rechten oder von der hinteren oder von der vorderen Maschinenseite eingeschoben werden.

Gemäß einer bevorzugten Ausgestaltung ist der Förderer als Späne- und Staubabsaugung ausgebildet.

Gemäß einer bevorzugten Ausgestaltung ist in der Späne- und Staubabsaugung ein Filterabscheider und/oder ein Zyklonabscheider zur Trennung von Luft und Bearbeitungsrückständen vorgesehen.

Gemäß einer bevorzugten Ausgestaltung ist der Förderer als Pumpensystem ausgeführt, mit dem die mit Bearbeitungsrückständen verunreinigte Kühlmittelflüssigkeit aus dem Bearbeitungszentrum abgepumpt werden kann.

Gemäß einer bevorzugten Ausgestaltung erfolgt die Trennung von Kühlmittelflüssigkeit und Bearbeitungsrückstände in dem Pumpensystem durch einen Filterabscheider und/oder durch einen Zyklonabscheider.

Gemäß einer bevorzugten Ausgestaltung besteht der Förderer aus einer Kombination von einem Späneförderer und einer Späne- und Staubabsaugung.

Gemäß einer bevorzugten Ausgestaltung besteht der Förderer aus einer Kombination von einem Späneförderer und einem Pumpensystem.

Weitere Einzelheiten, Merkmale und Vorteile der Erfindung ergeben sich aus der nachfolgenden Beschreibung anhand der Zeichnungen. Es zeigen:

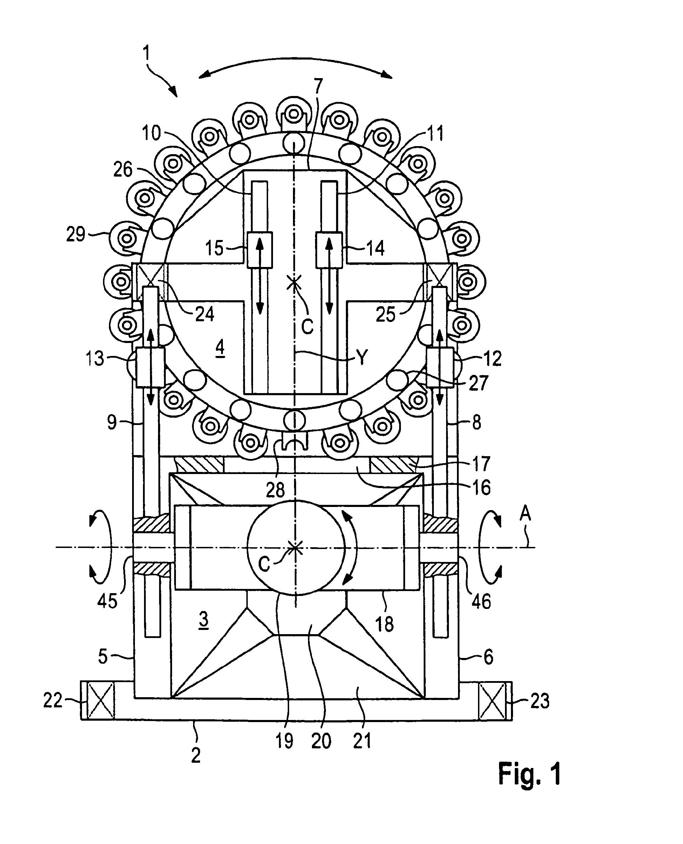

- Figur 1: eine Draufsicht auf ein erfindungsgemäßes Bearbeitungszentrum ohne werkzeugtragende Baugruppe und ohne Späneförderer,

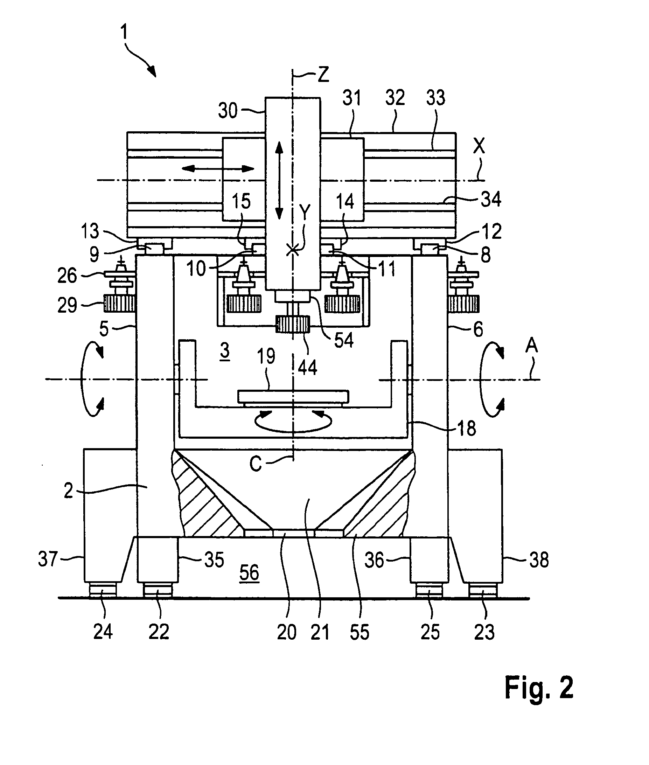

- Figur 2: eine Vorderansicht auf ein erfindungsgemäßes Bearbeitungszentrum ohne Späneförderer,
- Figur 3: eine Seitenansicht auf ein erfindungsgemäßes Bearbeitungszentrum ohne Späneförderer und ohne werkstücktragende Baugruppe,
- Figur 4: eine Teilvorderansicht auf ein erfindungsgemäßes Bearbeitungszentrum mit Späneförderer mit Auswurfbereich auf der rechten Maschinenseite,
- Figur 5: eine Teilvorderansicht auf ein erfindungsgemäßes Bearbeitungszentrum mit Späneförderer mit Auswurfbereich auf der linken Maschinenseite,
- Figur 6: eine Teilseitenansicht auf ein erfindungsgemäßes Bearbeitungszentrum mit Späneförderer mit Auswurfbereich auf der hinteren Maschinenseite.

In den Figuren ist ein vertikales Bearbeitungszentrum 1, insbes. zum Fräsen, Drehen und Bohren, in Gantry-Bauform in verschiedenen Ansichten gezeigt.

Das Bearbeitungszentrum 1 weist ein U-förmiges Maschinengestell 2 mit einer rechten und einer linken Seitenwandung 5, 6 auf. An dem Maschinengestell 1 ist eine werkzeugtragende und werkstücktragende Baugruppe 3 gelagert.

Die werkstücktragende Baugruppe 3 umfasst eine Schwenkbrücke 18 für die Aufnahme eines Werktück-Drehtisches 19 und ist über Lager 45, 46 in den Seitenwandungen 5, 6 des U-förmigen Maschinengestells 2 gelagert.

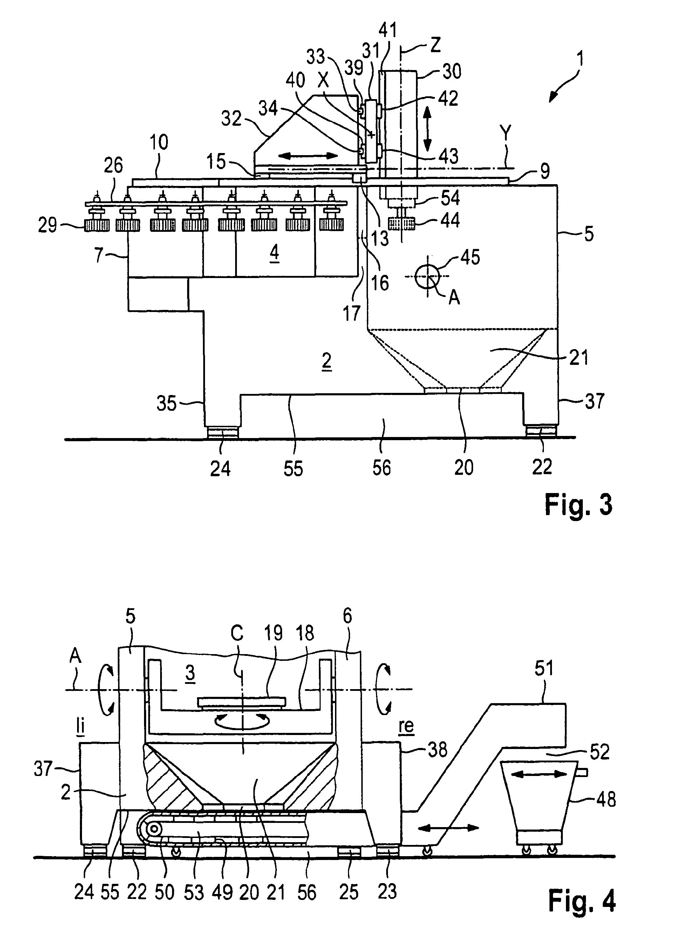

Die werkzeugtragende Baugruppe 3 umfasst eine Werkzeugspindel 54 mit einem Bearbeitungswerkzeug 44 und ist in einem Vertikalschlitten 30 gelagert, der eine Führungsschiene 41 aufweist, die über Führungsschuhe 42, 43 an einem Querschlitten 31 vertikal verfahrbar ist. Der Querschlitten 31 wiederum ist mit Führungsschuhen 39, 40 versehen, welche an Führungsschienen 33, 34 eines Längsschlittens 32 in X-Richtung verfahrbar sind. Der Längsschlitten 32 wiederum ist über äußere Führungsschuhe 12, 13 und innere Führungsschuhe 14, 15 an äußeren Führungsschienen 8, 9, die auf den Seitenwandungen 5, 6 des Maschinengestells 2 ruhen, und inneren Führungsschienen 10, 11, die auf einer Auslegerstütze 7 des Maschinengestells 2 ruhen, entlang der Y-Achse (Figur 3) verfahrbar. Aufgrund dieser Anordnung kann der Vertikalschlitten 30 und mit ihm das Bearbeitungswerkzeug 44 in allen drei Raumrichtungen X, Y und Z verfahren werden.

Der zwischen den Seitenwandungen 5, 6 gebildete Arbeitsraum des Bearbeitungszentrums 1 ist nach hinten von einer sich zwischen den Seitenwandungen 5, 6 erstreckenden Trennwand 17 begrenzt. In dieser Trennwand 17 ist eine Öffnung 16 vorgesehen, durch welche die Werkzeugspindel 54 in ein hinter dem Arbeitsraum liegendes Werkzeugmagazin 4 einfahren kann, um im Pick-Up-Verfahren einen Werkzeugwechsel vornehmen zu können. Die Öffnung 16 kann durch eine nicht dargestellte Tür verschlossen werden, so dass Bearbeitungsrückstände nicht vom Arbeitsraum in das Werkzeugmagazin 4 gelangen können.

Das Werkzeugmagazin 4 umfasst einen Magazinring 26, der auf Lagern 27 gelagert ist und an seiner Peripherie Werkzeughalter 28 für Bearbeitungswerkzeuge 29 trägt.

Das gesamte Bearbeitungszentrum 1 ist auf Maschinenfüßen 35, 36, 37 und 38 gelagert, wobei der lichte Abstand der vorderen Maschinenfüße 37, 38 größer ist als die Breite des Maschinengestells 2 und auch größer als der lichte Abstand der hinteren Maschinenfüße 35, 36. Die Maschinenfüße 35, 36, 37 und 38 sind in der Höhe anpassbar und ruhen in rutsch- und vibrationshemmenden Maschinenschuhen 22, 23, 24 und 25.

In dem U-förmigen Maschinengestell 2 ist zwischen den Seitenwandungen 5, 6 eine trichterförmige Verjüngung 21 vorgesehen, welche in eine im Wesentlichen unterhalb der Schwenkbrücke 18 angeordnete Bodenöffnung 20 mündet, die im Maschinengestellboden 55 ausgebildet ist. Durch die trichterförmige Verjüngung 21 und die Bodenöffnung 20 können Bearbeitungsrückstände abgeführt werden.

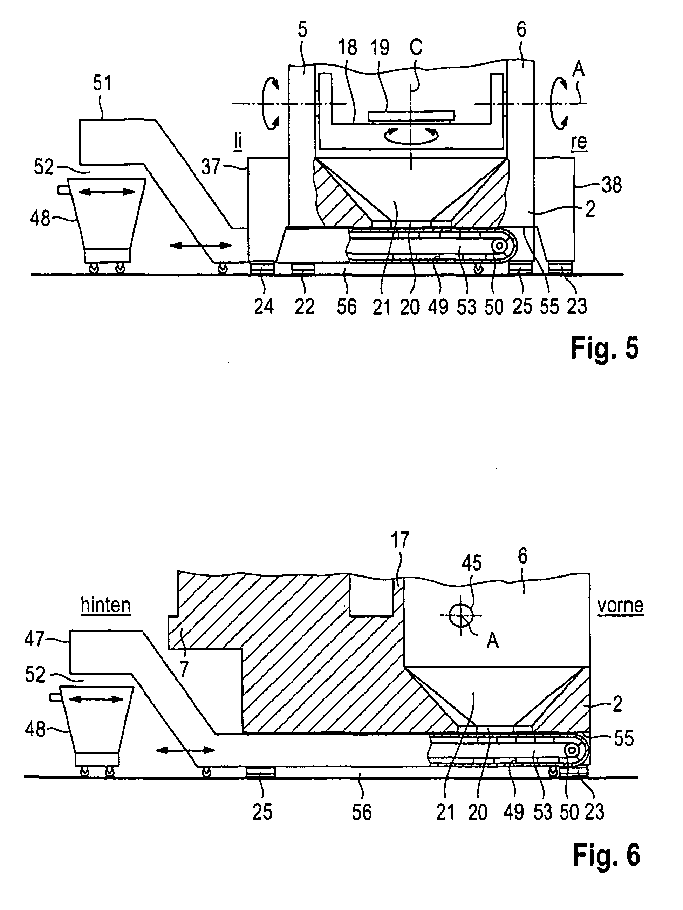

Unterhalb des Maschinengestellbodens 55 und zwischen den Maschinenfüßen 35, 36, 37, 38 bzw. den Maschinenschuhen 22, 23, 24, 25 erstreckt sich ein Freiraum 56, in den ein mobiler Späneförderer 47, 51 von links, von rechts (Figur 5), von hinten oder von vorne (Figur 6) eingeschoben werden kann. Der von links bzw. von rechts einschiebbare Späneförderer 51 ist aufgrund der Abmessungen des Bearbeitungszentrums naturgemäß kürzer als der von hinten bzw. vorne einschiebbare Späneförderer 47. Jedoch ist die gesamte Konstruktion so gewählt, dass der gleiche Späneförderer 51 bzw. 47 von links und von rechts bzw. von hinten und von vorne eingeschoben werden kann, dazu muss nur die Länge des Späneförderers 51 bzw. 47 über ein Adapterstück entsprechend verändert werden.

Da die Maschinenschuhe 22, 23, 24, und 25_höhenverstellbar sind, kann der Freiraum 56 unter dem Maschinengestellboden 55 an die Einschubhöhe des Förderers angepasst werden.

Der Späneförderer 47 bzw. 51 umfasst ein Förderband 50, auf dem Mitnahmeleisten 49 angeordnet sind. Das Förderband 50 transportiert die Bearbeitungsrückstände von einem Aufgabebereich 53 unterhalb der Bodenöffnung 20 zu einem Auswurfbereich 52 und von dort in einen mobilen Auffangbehälter 48 außerhalb des Bearbeitungszentrums 1.

Der Förderer kann als Späne- und Staubabsaugung ausgebildet sein und einen Filterabscheider und/oder ein Zyklonabscheider zur Trennung von Luft und Bearbeitungsrückständen aufweisen. Alternativ kann der Förderer auch als Pumpensystem ausgebildet sein, mit dem die mit Bearbeitungsrückständen verunreinigte Kühlmittelflüssigkeit aus dem Bearbeitungszentrum 1 abgepumpt werden. Die Trennung von Kühlmittelflüssigkeit und Bearbeitungsrückstände in dem Pumpensystem kann durch einen Filterabscheider und/oder durch einen Zyklonabscheider erfolgen. Der Förderer kann auch aus einer Kombination von einem Späneförderer 47, 51 und einer Späne- und Staubabsaugung oder einem Späneförderer 47, 51 und einem Pumpensystem bestehen.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Ansprüche zu verlassen.

### Bezugszeichenliste

- 1: Vertikales Bearbeitungszentrum
- 2: U-förmiges Maschinengestell
- 3: werkzeugtragende und werkstücktragende Baugruppe
- 4: Werkzeugmagazin
- 5: Seitenwandung
- 6: Seitenwandung
- 7: Auslegerstütze
- 8: Führungsschiene
- 9: Führungsschiene
- 10: Führungsschiene
- 11: Führungsschiene
- 12: Führungsschuh
- 13: Führungsschuh
- 14: Führungsschuh
- 15: Führungsschuh
- 16: Öffnung
- 17: Trennwand
- 18: Schwenkbrücke
- 19: Werkstück-Drehtisch
- 20: Bodenöffnung
- 21: Trichterförmige Verjüngung
- 22: Maschinenschuh
- 23: Maschinenschuh
- 24: Maschinenschuh
- 25: Maschinenschuh
- 26: Werkzeugmagazinring
- 27: Lager
- 28: Werkzeughalter
- 29: Bearbeitungswerkzeug
- 30: Vertikalschlitten
- 31: Querschlitten
- 32: Längsschlitten
- 33: Führungsschiene
- 34: Führungsschiene
- 35: Maschinenfuß
- 36: Maschinenfuß
- 37: Maschinenfuß
- 38: Maschinenfuß
- 39: Führungsschuh
- 40: Führungsschuh
- 41: Führungsschiene
- 42: Führungsschuh
- 43: Führungsschuh
- 44: Bearbeitungswerkzeug
- 45: Lager
- 46: Lager
- 47: Späneförderer
- 48: Auffangbehälter
- 49: Mitnahmeleisten
- 50: Förderband
- 51: Späneförderer
- 52: Auswurfbereich
- 53: Aufgabebereich
- 54: Werkzeugspindel
- 55: Maschinengestellboden
- 56: Freiraum

## Patentansprüche

1. Vertikales Bearbeitungszentrum (1), insbes zum Fräsen, Drehen und Bohren, in Gantry- oder Fahrständer-Bauform mit einem zwei Seitenwandungen (5, 6) aufweisenden U-förmigen Maschinengestell (2) und mit einer auf den Seitenwandungen (5, 6) angeordneten werkzeugtragenden Baugruppe (3), die in den drei linearen Raumrichtungen (X-Y-Z) elektromotorisch gesteuert verstellbar ist, und mit einer zwischen den Seitenwandungen (5, 6) befindlichen werkstücktragenden Baugruppe (3) und mit einer Bodenöffnung (20) im Maschinengestellboden (55) für die Abfuhr von Bearbeitungsrückständen aus dem Arbeitsbereich der werkzeugtragenden und der werkstücktragenden Baugruppe (3) und mit einem mobilen Förderer (47, 51) mit einem Auswurfbereich (52) und einem Aufgabenbereich (53) für die Aufnahme der Bearbeitungsrückstände aus dem Arbeitsbereich und die Abfuhr der Bearbeitungsrückstände, wobei
die Bodenöffnung (20) für die Abfuhr der Bearbeitungsrückstände zum Förderer im Maschinengestellboden (55) angebracht ist, wobei das U-förmige Maschinengestell (2) durch Maschinenfüße (35, 36, 37, 38), die in der Höhe anpassbar sind und in rutsch- und vibrationshemmenden und in der Höhe verstellbaren Maschinenschuhen (22,23,24,25) ruhen, einen ausreichend großen Freiraum unter dem Maschinengestellboden (55) besitzt, wobei
die Bodenöffnung (20) im Maschinengestellboden (55) so angeordnet ist, dass der gleiche mobile Späneförderer (47, 51) von links und von rechts und von hinten und von vorne unter die Bodenöffnung (20) einschiebbar ist, und wobei
die Länge des Späneförderers (47, 51) über ein Adapterstück veränderbar ist.

2. Vertikales Bearbeitungszentrum nach Anspruch 1, **dadurch gekennzeichnet, dass** im Arbeitsbereich der werkzeugtragenden und der werkstücktragenden Baugruppe (3) zwischen den Seitenwandungen (5, 6) und der Bodenöffnung (20) im Maschinengestellboden (55) eine allseitig ausgeformte trichterförmige Verjüngung (21) angebracht ist

3. Vertikales Bearbeitungszentrum nach Anspruch 1 oder 2, **dadurch gekennzeichnet, dass** der Förderer als Späneförderer (47, 51) mit einem endlos umlaufenden kraftbetriebenen Förderband (50) ausgebildet ist.

4. Vertikales Bearbeitungszentrum nach Anspruch 3, **dadurch gekennzeichnet, dass** auf dem endlos umlaufenden Förderband (50) des Späneförderers (47, 51) beabstandete Mitnahmeleisten (49) für die Mitnahme der Bearbeitungsrückstände angebracht sind.

5. Vertikales Bearbeitungszentrum nach einem der Ansprüche 1 bis 4, **dadurch gekennzeichnet, dass** als Sammelstelle für die Bearbeitungsrückstände ein verfahrbarer Auffangbehälter (48), insbes ein Spänewagen, vorgesehen ist.

6. Vertikales Bearbeitungszentrum nach einem der Ansprüche 1 bis 5, **dadurch gekennzeichnet, dass** die Bodenöffnung (20) im Maschinengestellboden (55) so angeordnet ist, dass der von links oder von rechts einschiebbare Späneförderer (47, 51) die gleichen geometrischen Abmessungen besitzen kann.

7. Vertikales Bearbeitungszentrum nach einem der Ansprüche 1 bis 5, **dadurch gekennzeichnet, dass** die Bodenöffnung (20) im Maschinengestellboden (55) so angeordnet ist, dass der von links oder von rechts oder von vorne oder von hinten einschiebbare Späneförderer (47, 51) die gleichen geometrischen Abmessungen besitzen kann.

8. Vertikales Bearbeitungszentrum nach einem der Ansprüche 1 bis 7, **dadurch gekennzeichnet, dass** der Förderer (47, 51) als Späne- und Staubabsaugung ausgebildet ist.

9. Vertikales Bearbeitungszentrum nach einem der Ansprüche 1 bis 8, **dadurch gekennzeichnet, dass** in der Späne- und Staubabsaugung ein Filterabscheider und/oder ein Zyklonabscheider zur Trennung von Luft und Bearbeitungsrückständen vorgesehen ist.

10. Vertikales Bearbeitungszentrum nach einem der Ansprüche 1 bis 7, **dadurch gekennzeichnet, dass** der Förderer (47,51) als Pumpensystem ausgebildet ist, mit dem die mit Bearbeitungsrückständen verunreinigte Kühlmittelflüssigkeit aus dem Bearbeitungszentrum (1) abgepumpt werden kann.

11. Vertikales Bearbeitungszentrum nach Anspruch 10, **dadurch gekennzeichnet, dass** die Trennung von Kühlmittelflüssigkeit und Bearbeitungsrückstände in dem Pumpensystem durch einen Filterabscheider und/oder durch einen Zyklonabscheider erfolgt.

12. Vertikales Bearbeitungszentrum nach einem der Ansprüche 1 bis 11, **dadurch gekennzeichnet, dass** der Förderer (47,51) aus einer Kombination von einem Späneförderer (47, 51) und einer Späne- und Staubabsaugung besteht.

13. Vertikales Bearbeitungszentrum nach einem der Ansprüche 1 bis 11, da-durch gekennzeichnet, dass der Förderer (47,51) aus einer Kombination von einem Späneförderer (47, 51) und einem Pumpensystem besteht.

14. Vertikales Bearbeitungszentrum nach einem der Ansprüche 1 bis 13, **dadurch gekennzeichnet, dass** die werkstücktragende Baugruppe (3) in den zwei rotativen Raumrichtungen (A/B-C) elektromotorisch verstellbar ist.

## Claims

1. Vertical machining centre (1), in particular for milling, turning and boring, in a gantry or travelling column form of construction having a U-shaped machine frame (2) that has two side walls (5, 6) and having a tool-carrying assembly (3) which is arranged on the side walls (5, 6) and is adjustable in the three linear spatial directions (X-Y-Z) in a manner controlled by an electric motor, and having a workpiece-carrying assembly (3) located between the side walls (5, 6), and having a base opening (20) in the base (55) of the machine frame for discharging machining scrap from the working region of the tool-carrying and the workpiece-carrying assembly (3), and having a mobile conveyor (47, 51) having a removing region (52) and a charging region (53) for receiving the machining scrap from the working region and discharging the machining scrap, wherein the base opening (20) for discharging the machining scrap to the conveyor is fitted in the base (55) of the machine frame, wherein the U-shaped machine frame (2) has a sufficiently large free space under the base (55) of the machine frame on account of machine feet (35, 36, 37, 38) which are vertically adaptable and rest in non-slip, vibration-damping and vertically adjustable machine shoes (22, 23, 24, 25), wherein the base opening (20) in the base (55) of the machine frame is arranged such that the same mobile chip conveyor (47, 51) is introducible from the left and from the right and from the rear and from the front under the base opening (20), and wherein the length of the chip conveyor (47, 51) is changeable via an adapter piece.

2. Vertical machining centre according to Claim 1, **characterized in that** a funnel-shaped narrowing (21) formed on all sides is fitted in the working region of the tool-carrying and workpiece-carrying assembly (3) between the side walls (5, 6) and the base opening (20) in the base (55) of the machine frame.

3. Vertical machining centre according to Claim 1 or 2, **characterized in that** the conveyor is formed as a chip conveyor (47, 51) having an endlessly circulating power-operated conveying belt (50).

4. Vertical machining centre according to Claim 3, **characterized in that** spaced-apart carry-along bars (49) for carrying along the machining scrap are fitted on the endlessly circulating conveying belt (50) of the chip conveyor (47, 51).

5. Vertical machining centre according to one of Claims 1 to 4, **characterized in that** a displaceable collecting container (48), in particular a chip carriage, is provided as collection point for the machining scrap.

6. Vertical machining centre according to one of Claims 1 to 5, **characterized in that** the base opening (20) in the base (55) of the machine frame is arranged such that the chip conveyor (47, 51) which is introducible from the left or from the right can have the same geometric dimensions.

7. Vertical machining centre according to one of Claims 1 to 5, **characterized in that** the base opening (20) in the base (55) of the machine frame is arranged such that the chip conveyor (47, 51) which is introducible from the left or from the right or from the front or from the rear can have the same geometric dimensions.

8. Vertical machining centre according to one of Claims 1 to 7, **characterized in that** the conveyor (47, 51) is formed as a chip and dust extraction means.

9. Vertical machining centre according to one of Claims 1 to 8, **characterized in that** a filter separator and/or a cyclone separator for separating air and machining scrap is provided in the chip and dust extraction means.

10. Vertical machining centre according to one of Claims 1 to 7, **characterized in that** the conveyor (47, 51) is formed as a pump system, by way of which the coolant liquid contaminated with machining scrap can be pumped out of the machining centre (1).

11. Vertical machining centre according to Claim 10, **characterized in that** coolant liquid and machining scrap are separated in the pump system by a filter separator and/or by a cyclone separator.

12. Vertical machining centre according to one of Claims 1 to 11, **characterized in that** the conveyor (47, 51) consists of a combination of a chip conveyor (47, 51) and a chip and dust extraction means.

13. Vertical machining centre according to one of Claims 1 to 11, **characterized in that** the conveyor (47, 51) consists of a combination of a chip conveyor (47, 51) and a pump system.

14. Vertical machining centre according to one of Claims 1 to 13, **characterized in that** the workpiece-carrying assembly (3) is adjustable in the two rotary spatial directions (A/B-C) by means of an electric motor.

## Revendications

1. Centre de traitement vertical (1), en particulier pour le fraisage, le tournage et le forage, dans une construction Gantry ou à poste de contrôle de manoeuvre, avec un bâti de machine (2) en forme de U présentant deux parois latérales (5, 6) et avec un sous-groupe (3) portant les outils disposé sur les parois latérales (5, 6), qui est commandé par moteur électrique pour son réglage dans les trois directions dans l'espace linéaire (X-Y-Z), et avec un sous-groupe (3) portant les pièces se trouvant entre les parois latérales (5, 6) et avec une ouverture (20) dans le fond du bâti de machine (55) destinée à évacuer les résidus de traitement de la zone de travail du sous-groupe (3) portant les outils et du sous-groupe (3) portant les pièces et avec un convoyeur mobile (47, 51) doté d'une zone d'éjection (52) et d'une zone d'alimentation (53) pour la réception des résidus de traitement provenant de la zone de travail et l'évacuation des résidus de traitement, sachant que
l'ouverture au fond (20) destinée à évacuer les résidus de traitement vers le convoyeur est installée dans le fond du bâti de machine (55), sachant que
le bâti de machine (2) en forme de U possède grâce à des pieds de machine (35, 36, 37, 38) qui peuvent être adaptés en hauteur et reposent dans des patins de machine (22, 23, 24, 25) antidérapants, antivibrations et réglables en hauteur, un espace libre suffisamment grand sous le fond du bâti de machine (55), sachant que
l'ouverture au fond (20) est disposée dans le fond du bâti de machine (55) de sorte que le même convoyeur de copeaux mobile (47, 51) puisse être inséré par la gauche et la droite et par derrière et devant sous l'ouverture au fond (20), et sachant que
la longueur du convoyeur de copeaux (47, 51) peut être modifiée par un adaptateur.

2. Centre de traitement vertical selon la revendication 1, **caractérisé en ce qu'**un rétrécissement (21) en forme d'entonnoir formé de tous les côtés est monté dans la zone de travail des sous-groupes (3) portant les pièces et portant les outils entre les parois latérales (5, 6) et l'ouverture (20) dans le fond du bâti de machine (55).

3. Centre de traitement vertical selon la revendication 1 ou 2, **caractérisé en ce que** le convoyeur est réalisé comme un convoyeur de copeaux (47, 51) doté d'une bande transporteuse (50) commandée par moteur, tournant sans fin.

4. Centre de traitement vertical selon la revendication 3, **caractérisé en ce que** des baguettes d'entraînement (49) espacées sont montées sur la bande transporteuse (50) tournant sans fin du convoyeur de copeaux (47, 51) pour l'entraînement des résidus de traitement.

5. Centre de traitement vertical selon l'une quelconque des revendications 1 à 4, **caractérisé en ce qu'**un récipient collecteur (48) déplaçable, en particulier un chariot de copeaux, est prévu comme point de collecte pour les résidus de traitement.

6. Centre de traitement vertical selon l'une quelconque des revendications 1 à 5, **caractérisé en ce que** l'ouverture au fond (20) est disposée dans le fond du bâti de machine (55) de sorte que le convoyeur de copeaux (47, 51) pouvant être inséré par la gauche ou la droite puisse posséder les mêmes dimensions géométriques.

7. Centre de traitement vertical selon l'une quelconque des revendications 1 à 5, **caractérisé en ce que** l'ouverture au fond (20) est disposée dans le fond du bâti de machine (55) de sorte que le convoyeur de copeaux (47, 51) pouvant être inséré par la gauche ou la droite ou par devant ou derrière puisse posséder les mêmes dimensions géométriques.

8. Centre de traitement vertical selon l'une quelconque des revendications 1 à 7, **caractérisé en ce que** le convoyeur (47, 51) est réalisé comme une aspiration de copeaux et de poussières.

9. Centre de traitement vertical selon l'une quelconque des revendications 1 à 8, **caractérisé en ce qu'**un séparateur à filtre et/ou un séparateur à cyclone est prévu pour la séparation de l'air et des résidus de traitement dans l'aspiration de copeaux et de poussières.

10. Centre de traitement vertical selon l'une quelconque des revendications 1 à 7, **caractérisé en ce que** le convoyeur (47, 51) est réalisé comme un système de pompage, avec lequel le liquide réfrigérant contaminé par des résidus de traitement peut être évacué à la pompe du centre de traitement (1).

11. Centre de traitement vertical selon la revendication 10, **caractérisé en ce que** le liquide réfrigérant et les résidus de traitement sont séparés dans le système de pompage par un séparateur à filtre et/ou un séparateur à cyclone.

12. Centre de traitement vertical selon l'une quelconque des revendications 1 à 11, **caractérisé en ce que** le convoyeur (47, 51) se compose d'une combinaison d'un convoyeur de copeaux (47, 51) et d'une aspiration de copeaux et de poussières.

13. Centre de traitement vertical selon l'une quelconque des revendications 1 à 11, **caractérisé en ce que** le convoyeur (47, 51) se compose d'une combinaison d'un convoyeur de copeaux (47, 51) et d'un système de pompage.

14. Centre de traitement vertical selon l'une quelconque des revendications 1 à 13, **caractérisé en ce que** le sous-groupe portant les pièces (3) est réglable par moteur électrique dans les deux directions dans l'espace rotatives (A/B-C).
